Europäisches Patentamt

European Patent Office

Office européen des brevets

(11) Publication number: **0 461 856 A1**

## (12) EUROPEAN PATENT APPLICATION

(21) Application number: **91305250.2**

(22) Date of filing: **11.06.91**

(51) Int. Cl.[5]: **G02B 27/00**, G02B 13/14,
  G02B 5/18

(30) Priority: **11.06.90 GB 9013011**

(43) Date of publication of application:
**18.12.91 Bulletin 91/51**

(84) Designated Contracting States:
**DE FR GB NL**

(72) Inventor: **Wood, Andrew P.**
**British Aerospace Dynamics Division, Six Hills Way**
**Stevenage, Herts SG1 2DA (GB)**

(74) Representative: **Dowler, Edward Charles et al**
**British Aerospace plc Corporate IPR**
**Department, Headquarters P.O.Box 87**
**Building Q191 Royal Aerospace**
**Establishment**
**Farnborough Hants GU14 6YU (GB)**

(71) Applicant: **BRITISH AEROSPACE PUBLIC LIMITED COMPANY**
**11 Strand**
**London WC2N 5JT (GB)**

(54) **Petzval objective lens system.**

(57)   For practical reasons, hybrid refractive-diffractive lenses usually have the diffractive element on a planar face of the diffractive element. Herein a hybrid meniscus lens has the diffractive element diamond machined (for example) on a curved face and is incorporated in a Petzval objective.

EP 0 461 856 A1

The invention relates to a Petzval objective lens system comprising two separated positive lenses. In a previously proposed Petzval objective lens system, each positive lens comprises a couplet, ie two closely, spaced elements, one positive and one negative. Thus, overall, the system comprised four elements.

It is the object of the invention to reduce the weight and material cost, by minimising material volume, of a Petzval objective lens whilst maintaining the good characteristics thereof.

According to the invention, there is provided a Petzval objective lens system comprising first and second lenses of which at least one is a hybrid refractive-diffractive lens with the diffractive element on a curved surface of the refractive element.

The or each hybrid refractive - diffractive lens may comprise a conventional singlet refracting element with a diffraction grating or holographic element fixed to it. If just one hybrid lens is employed, the other is a singlet refracting lens. One or both of the lenses may comprise an aspheric surface.

The hybrid element(s) have the appropriate power share between the refractive and diffractive components to control the overall chromatic aberration.

The lens system to be described herein is capable of providing sufficient degrees of freedom in the design to correct spherical aberration, coma and astigmatism. Spherical aberration may be corrected by the diffractive element(s) or by the use of one or more aspheric surfaces.

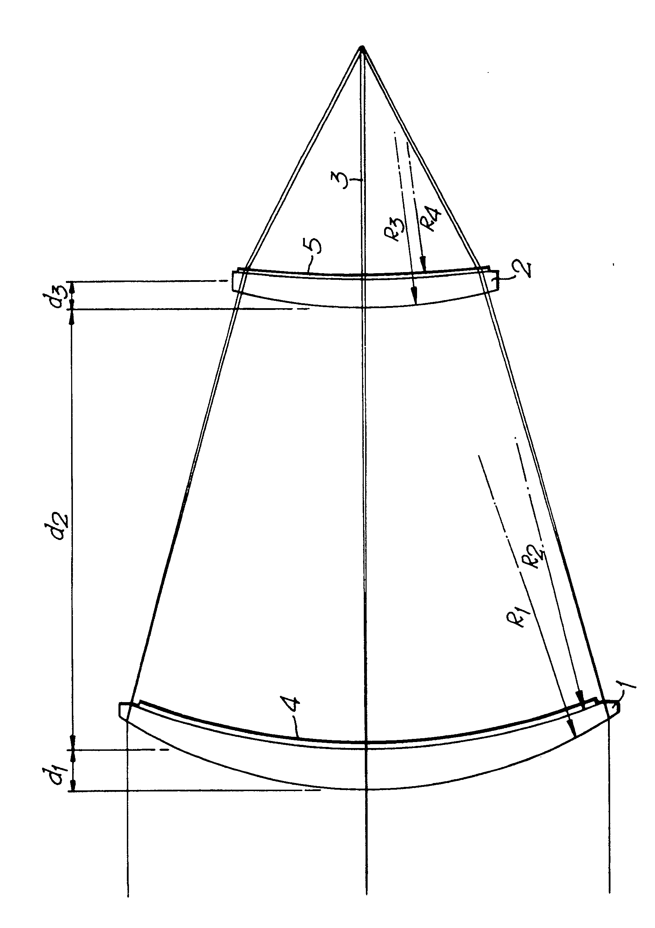

The invention will now be described, by way of example, with reference to the accompanying drawing, the single figure of which is a schematic view of a hybrid Petzval objective.

The following description will assume that both elements are of the hybrid refractive - diffractive type but it will be understood that other arrangements are possible, for example one hybrid element could be replaced by a conventional refractive singlet.

As appears from the drawing, the hybrid Petzval objective comprises two elements; a positive front lens 1 and positive rear lens 2 with a separation of the order of the overall focal length. The lenses 1 and 2 are centred to have a common optical axis 3.

Lens 1 is of meniscus form and its concave rear surface has a diffractive optical element 4 fixed to and conformal with it. The diffractive element 4 might comprise a diffraction grating formed by a series of annular grooves diamond machined into the lens surface or it might comprise a hologram of suitable characteristics stored in an optical storage medium, eg a developed photographic layer, fixed to the lens surface. One of the surfaces of lens (1) may be of general aspheric form. Lens 2 with diffraction element 5 on its rear surface is of the same general type as lens 1. This construction allows independent control of both spherical aberration and coma in both lenses 1 and 2. Hence, these aberrations together with astigmatism may be controlled. The location of the aperture stop is not crucial but is shown at the front lens in the drawing which minimises the size of lens 1. When the hybrid Petzval objective is arranged in a manner satisfying the conditions described above, the resultant structure contains significantly less material than any known prior art structure and is hence significantly lighter and less expensive while having characteristics which, for some purposes are at least as good as those previously achieved.

With $R_1$ and $R_2$ denoting the radii of curvature of the front lens 1 facing the object side and image side respectively and $R_3$ and $R_4$ those of the rear lens 2, in a specific embodiment, by way of example only, these radii have the following numerical values :

$R_1$ = 142.98666 mm
$R_2$ = 205.63893 mm
$R_3$ = 144.12972 mm
$R_4$ = 343.91272 mm

In this embodiment, moreover, the thicknesses of the respective lenses and the distances between them are selected to have specific numerical values. With $d_1$ and $d_3$ denoting the thicknesses, measured on the optical axis 3 of the front lens 1 and rear lens 2 respectively, $d_2$ denoting the distance measured on the optical axis 3 between the surface of the front lens 1 facing the image side and the rear lens 2 facing the object side, by way of example only, these thicknesses and distances respectively may be selected to have the following numerical values :

$d_1$ = 14.0 mm
$d_2$ = 151.0 mm
$d_3$ = 10.0 mm

In this embodiment, the surfaces of both the front lens 1 and rear lens 2 facing the object side are of aspherical form with a spherical base, according to the following equation,

$$Z(r) = \frac{cr^2}{\{1 + \sqrt{1-c^2r^2}\}} + A_4 r^4 + A_6 r^6 + A_8 r^8 + A_{10} r^{10}$$

Where $Z(r)$ is surface profile

$c$ is curvature of surface and is the inverse of the radius of curvature, $R$

$r$ is a radial co-ordinate measured perpendicularly from the optical axis 3

$A_4$ to $A_{10}$ are the aspheric co-efficients

Denoting $A1_4$ to $A1_{10}$ and $A2_4$ to $A2_{10}$ as the aspheric co-efficients relevant to the surfaces facing the objects side of lenses 1 and 2 respectively, then in this embodiment by way of example, these co-efficients should be selected to have the following numerical values :

$A1_4 = -0.10118403 \times 10^{-7} mm^{-3}$     $A2_4 = -0.36447509 \times 10^{-7} mm^{-3}$

$A1_6 = -0.43862169 \times 10^{-12} mm^{-5}$     $A2_6 = -0.31317680 \times 10^{-11} mm^{-5}$

$A1_8 = -0.17195521 \times 10^{-16} mm^{-7}$     $A2_8 = +0.10657095 \times 10^{-14} mm^{-7}$

$A1_{10} = -0.13676072 \times 10^{-20} mm^{-9}$     $A2_{10} = -0.24299136 \times 10^{-18} mm^{-9}$

Moreover, in this embodiment, the surfaces of both the front lens 1 and rear lens 2 facing the image side have holographic or diffractive optical elements fixed to them. The radii of curvature of the substrates onto which these diffractive elements are formed are equivalent to those of the surfaces onto which they are fixed; $R_2$ and $R_4$ for lenses 1 and 2 respectively. These diffractive structures may be of the blazed zone plate or kinoform type and thereby formed directly onto the relevant surfaces during the manufacturing process. In this embodiment, the diffractive elements are designed to transform a spherical wave centred on $L_r$ a distance $L_r$ from the element into a spherical wave centred on $L_o$ a distance $l_o$ from the element. Denoting $L1_r$ and $l1_o$ and $l2_r$ and $l2_o$ as the diffractive element design conjugator relevant to the surfaces facing the image side of lenses 1 and 2 respectively, then, by way of example, in this embodiment these parameters may be selected to have the following numerical values :

$L1_r = 364.6274$ mm

$l1_o = 358.5756$ mm

$l2_r = 72.4206$ mm

$l2_o = 73.2690$ mm

In this particular embodiment, both the front lens 1 and the rear lens 2 are made from Zinc Sulphide.

This above described example is of a meniscus hybrid element (i.e. where neither surfaces of the lens are plane) which requires that the diffractive element be formed on a curved surface. This allows correction of both spherical aberration and coma simultaneously which gives the possibility of replacing conventional doublets (i.e. 2 elements - 1 positive and 1 negative close together) without loss of performance. Using the hybrid in a Petzval lens as shown can achieve performance equivalent to a conventional Petzval lens in which the lenses 1 and 2 would each comprise <u>four</u> conventional refracting elements in all.

The described hybrid Petzval lens, with the performance it offers, is appropriate for various infra-red seeker and surveillance type applications.

## Claims

1. A Petzval objective lens system comprising first and second lenses of which at least one is a hybrid refractive-diffractive lens with the diffractive element on a curved surface of the refractive element.

2. A Lens system according to claim 1, wherein said hybrid lens is a meniscus lens.

3. A lens system according to claim 1 or 2, wherein one or each of the first and second lenses comprises an aspheric surface.

European Patent
Office

**EUROPEAN SEARCH REPORT**

Application Number

EP 91 30 5250

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 421 705 (WEINGäRTNER)<br>* claims 1,2; figure 2 *<br>--- | 1-3 | G 02 B 27/00<br>G 02 B 13/14<br>G 02 B 5/18 |
| Y | OPTICAL ENGINEERING vol. 26, no. 11, November 1987, pages 1102-1111, Bellingham, Wa, US; P.R. HALL: "Use of aspheric surfaces in infrared optical designs"<br>* page 1107; figures 7,9 *<br>--- | 1-3 | |
| A | EP-A-0 359 179 (JOHNSON)<br>* abstract; figure 1 *<br>--- | 1 | |
| A | US-A-4 293 196 (HILBERT)<br>* column 1, line 52 - column 2, line 13; figure 2 *<br>----- | 1-3 | |
| | | | **TECHNICAL FIELDS SEARCHED (Int. Cl.5)**<br><br>G 02 B 3/00<br>G 02 B 5/00<br>G 02 B 13/00<br>G 02 B 27/00 |

The present search report has been drawn up for all claims

| Place of search | Date of completion of the search | Examiner |
|---|---|---|
| BERLIN | 18-09-1991 | VON MOERS F |

EPO FORM 1503 03.82 (P0401)